# EUROPÄISCHE PATENTSCHRIFT

(11) **EP 2 210 823 B1**
(45) Veröffentlichungstag und Bekanntmachung des Hinweises auf die Patenterteilung: **11.06.2014**
(21) Anmeldenummer: 09174153.8
(22) Anmeldetag: 27.10.2009
(51) Int. Cl.: B65D 83/00, A61C 5/00, B05C 17/00

(54) **Ausbringvorrichtung**
discharge device
Dispositif de distribution

(30) Priorität: 22.01.2009 DE 102009005697
(43) Veröffentlichungstag der Anmeldung: 28.07.2010
(73) Patentinhaber: Ivoclar Vivadent AG, 9494 Schaan (LI)
(72) Erfinder: Pokorny, Walter, 6719 Gais (AT); Wachter, Wolfgang, 9494 Schaan (LI); Galehr, Klaus, 6824 Schlins (AT); Rohner, Gottfried, 9450 Altstätten (CH); Suffel, Ralf, 9469 Haag (CH)
(74) Vertreter: Splanemann

(56) Entgegenhaltungen:
- EP-A2- 1 020 167
- WO-A1-01/45772
- DE-U- 1 398 907

## Beschreibung

Die Erfindung betrifft eine Ausbringvorrichtung für Dentalmassen, gemäß dem Oberbegriff von Anspruch 1.

Eine derartige Ausbringvorrichtung ist seit langem bekannt. Beispielhaft wird auf die DE 1 398 907 A1 verwiesen. Diese Lösung betrifft zwar nicht Dentalmassen, sondern eine Handsalbe, weist jedoch eine Kartusche und eine Ausbringdüse auf. Zwischen diesen ist eine formschlüssige Verbindung vorgesehen, und es sind Öffnungen zur Be- und Entlüftung der dortigen Kartusche ausgebildet. Die Öffnungen können dort entweder an der Kartusche oder an der Ausbringdüse vorgesehen sein.

Ein Nachteil einer derartigen Lösung besteht darin, dass dort auch die zu verpressende Masse austreten kann. Dies mag bei einer Handsalbe nach relativ unkritisch sein, denn wenn dort Masse austritt, nachdem die Entlüftung durch Druck auf den Kolben der Kartusche realisiert ist, lässt sich diese relativ unproblematisch entfernen.

Demgegenüber sind Dentalmassen häufig jedoch recht hochwertig, so dass Verluste vermieden werden sollten. In Rohform weisen sie häufig auch reaktive Substanzen auf. Zu denken ist beispielsweise an die freien Radikale in Monomeren von lichthärtbaren Dentalmassen, aber auch in Pasten verwendete Verbindungen, die erst durch das Brennen im Dentalbrennofen einen stabilen und nicht reaktiven Zustand erreichen.

Die EP 1 020 167 betrifft eine Ausbringvorrichtung für Zement, mit dem Implantate mit Knochen verbunden werden. Der Zement wird durch Mischen von zwei Komponenten bereitgestellt. Die Ausbringvorrichtung weist einen Entlüftungskanal mit einem ersten und einem zweiten Abschnitt auf, die durch einen Filter getrennt sind. Der Filter dient dazu, Luft aus der Ausbringvorrichtung entweichen zu lassen, den Zement aber zurückzuhalten. Die Drücke, die zum Auspressen einer Dentalmasse erforderlich sind, sind jedoch deutlich höher als beim Zement, so dass der Filter den Austritt einer Dentalmasse nicht wirksam verhindern kann.

Um insofern keine Verschmutzung gerade im Bereich der Ausbringdüse zu realisieren, ist es auch bekannt geworden, die Entlüftung im Bereich des Kolbens zu realisieren. Gerade bei Einmaldüsen ist dies unkritisch, denn wenn dort Dentalmasse austritt, verbleibt sie relativ geschützt im Bereich der Kartusche zwischen dem Stempel des Kolbens und dem Kolbenhandgriff. Eine derartige Lösung lässt sich beispielsweise der DE 200 10 417 entnehmen, die auch ein spezielles Ventil vorsieht.

Diese Lösung ist jedoch umständlich und im Grunde lediglich dann sinnvollerweise einsetzbar, wenn die Kartusche hängend aufbewahrt wird, so dass die in der Dentalmasse verbleibende Luftmasse sich dem Stempel des Kolbens benachbart einfindet.

Bei Dentalmassen besteht andererseits das Problem, dass auch im Bereich der Ausbringdüse der Einschluss von Luftbläschen nach Möglichkeit vermieden werden sollte. Derartige Luftbläschen haben eine signifikante Verschlechterung des Restaurationsergebnisses zur Folge, denn bei Lufteinschlüssen ist das Dentalmaterial dann typischerweise geschwächt, es ergeben sich Hohlräume, die verunreinigungsträchtig sind und ggf. bedarf auch das ästhetische Erscheinungsbild der Restauration der Nachbearbeitung.

Um dementsprechend derartige Lufteinschlüsse nach Möglichkeit zu vermeiden, ist es vorgeschlagen worden, Kartuschen hängend aufzubewahren und beim Anschluss der Ausbringdüse darauf zu achten, dass nach Möglichkeit keine Lufteinschlüsse verbleiben. Typischerweise ragt ein Kragen der Ausbringdüse in die Kartusche hinein. Gerade bei einer derartigen Kragen-Ausgestaltung besteht die Gefahr, dass sich Luft dann hinter dem Kragen, also an der höchsten Stelle der Kartusche, ansammelt und ggf. mitgerissen wird, wenn der Kolben betätigt wird.

Auch dann, wenn ein derartiger Kragen nicht vorgesehen ist, besteht jedoch die Möglichkeit, dass Lufteinschlüsse verbleiben, die dann mitgerissen werden. Zwar ist es hierzu bereits vorgeschlagen worden, der oberen Abschlusswand oder Stirnwand der Kartusche einen kegelstumpfförmigen Aufbau zu geben. Bei einem eher viskosen Dentalmaterial besteht jedoch die Möglichkeit, dass sich die Dentalmasse bereits mindestens teilweise in die Düsentülle der Ausbringdüse hineinerstreckt und damit gegen die Kante am Übergang zwischen konischem Teil und Tülle absperrt. Auch hierdurch können Lufteinschlüsse entstehen, bei denen die Gefahr besteht, dass sie mitgerissen werden.

Daher liegt der Erfindung die Aufgabe zugrunde, eine Ausbringvorrichtung für Dentalmassen gemäß dem Oberbegriff von Anspruch 1 zu schaffen, die für den störungsfreien Betrieb, gerade auch bei optimierter Aufbewahrung der Kartuschen, besser geeignet ist.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, wenn zwischen der Ausbringdüse und der Kartusche, also an deren Übergang zueinander und damit der Auslassöff nung der Kartusche benachbart, oder aber diesem Übergang benachbart, ein erfindungsgemäßer und genau definierter Entlüftungskanal ausgebildet ist. Bevorzugt ist dieser Entlüftungskanal im Querschnitt schlitzförmig, hat also eine geringere Höhe als Breite. Es versteht sich, dass hierbei auch eine längsovale Ausgestaltung möglich ist, ohne den Bereich der Erfindung zu verlassen. Durch die vergleichsweise geringe Höhe wird erreicht, dass die Dentalmasse aufgrund ihrer Kohäsion nicht in den Schlitz eindringen kann. Dort sich ansammelnde Luft kann jedoch ohne weiteres entweichen, was erfindungsgemäß erwünscht ist.

Beispielsweise kann das Breiten-/Höhenverhältnis mehr als 2:1, bevorzugt aber mehr als 4:1 oder auch 10:1 betragen. Alternativ ist es auch möglich, eine Vielzahl von kleinen und kreisförmigen Entlüftungskanaleinlässen zu realisieren, die praktisch wie eine Art Sieb dienen und ebenfalls den Eintritt von Dentalmasse sperren.

Erfindungsgemäß weist der Entlüftungskanal eine Mehrzahl von Sperrstufen auf. Selbst wenn durch den Druck in der Dentalmasse dann die Kohäsion dieser für die erste Sperrstufe überwunden ist, wird in der nächsten Sperrstufe und in den weiteren ebenso zusätzliche Reibung erzeugt, wobei die Reibung dann bevorzugt so groß bemessen ist, dass bei vollständigem Leerpressen der Kartusche noch kein Material den Entlüftungskanal nach außen verlässt.

Besonders vorteilhaft ist es, wenn die Ausgestaltung und/oder die Durchmesser am Übergang zwischen der Ausbringdüse und der Kartusche in geeigneter Weise ausgebildet sind, so dass der Entlüftungskanal dort entsteht. Dies ermöglicht es, ohne zusätzliche Werkzeugmodifikationen, wie einen Schieber für die Realisierung eines Lochs in der Stirnwand der Kartusche, die erfindungsgemäße Ausbringvorrichtung herzustellen.

In erfindungsgemäß besonders bevorzugter Ausgestaltung ist es vorgesehen, den Entlüftungskanal umlaufend dort zu realisieren. Die exakte Drehposition der Kartusche ist dann für die Funktion des Entlüftungskanals nicht relevant; dies gilt auch dann, wenn die Kartusche in der Praxis schräg angeordnet ist, so dass die Ausbringdüse sich also schräg oberhalb der Kartusche befindet.

In diesem Zusammenhang ist es besonders günstig, wenn das Befüllen der Kartusche dann auch in dieser Stellung erfolgt, so dass also die Dentalmasse von unten in die Kartusche eingebracht wird und die ggf. eingeschlossene Luft sich oben, also im Bereich der Auslassöffnung der Kartusche, zu sammeln vermag.

In einer modifizierten Ausgestaltung ist es aber auch möglich, den Entlüftungskanal - oder ggf. mehrere um den Umfang verteilte Luftkanäle - so anzubringen, dass eine Dichtung zwischen der Ausbringdüse und der Kartusche an der Stelle, an der der Entlüftungskanal bestehen soll, unterbrochen ist. Die Dichtung kann auch einstückig in die Ausbringdüse oder die Kartusche eingearbeitet sein.

Erfindungsgemäß besonders günstig ist es, wenn die Dichtung nahezu vollständig kreisförmig zwischen der Kartusche und der Ausbringdüse abdichtet.

Erfindungsgemäß besonders günstig ist es, wenn der Entlüftungskanal mindestens an einer Stelle, beispielsweise an seinem Eingang, elastisch abdichtet. Durch den Druck der bei Betätigung des Kolbens unter Druck gebrachten Luft öffnet sich dann der Entlüftungskanal gegen die Elastizität der ihn begrenzenden Wände; sobald die Luft entwichen ist, und damit der Druck sinkt, wird der Entlüftungskanal auch erneut geschlossen.

Erfindungsgemäß besonders günstig ist es, dass eine formschlüssige Verbindung zwischen der Kartusche und der Ausbringdüse ausgebildet ist.

Erfindungsgemäß besonders günstig ist es, dass die Ausbringdüse eine Auslassöffnung der Kartusche abdeckt und mit der Kartusche insbesondere lösbar verbunden ist.

Erfindungsgemäß besonders günstig ist es, dass der Luftkanal am Übergang zwischen Ausbringdüse und Kartusche ausgebildet ist.

Erfindungsgemäß besonders günstig ist es, dass die Kartusche im Umfangsbereich ihrer Auslassöffnung insbesondere kegelstumpfförmig verjüngt ausgebildet ist und dass ein Anschlussbereich der Ausbringdüse eine entsprechende Gegenkontur aufweist und insbesondere die Verjüngung von dem Anschlussbereich der Ausbringdüse mindestens teilweise abgedeckt ist.

Erfindungsgemäß besonders günstig ist es, dass der Entlüftungskanal sich einer Dichtung zwischen der Ausbringdüse und der Kartusche, insbesondere zwischen Enden der Dichtung, erstreckt, die sich wenigstens teilweise entlang einem Umfangsbereich der Auslassöffnung erstreckt.

Besonders günstig ist es, dass der Entlüftungskanal mindestens eine Umlenkung aufweist und diesen verlängert, wobei der Entlüftungskanal insbesondere in Form eines Labyrinths ausgebildet ist.

Erfindungsgemäß besonders günstig ist es, dass sich dem Einlass des Entlüftungskanals benachbart Dentalmasse ansammelt und den Entlüftungskanal abdichtet.

Erfindungsgemäß besonders günstig ist es, dass der Entlüftungskanal mindestens einen Schlitz oder schmalen Spalt aufweist, dessen Höhe so gering ist, dass er von der Dentalmasse bei Betätigung des Kolbens nicht durchdringbar ist.

Erfindungsgemäß besonders günstig ist es, dass der Spalt kleiner als 1 mm, insbesondere kleiner als 0,5 mm ist, und dass insbesondere in dem Entlüftungskanal ein luftdurchlässiger Filter angeordnet ist.

Erfindungsgemäß besonders günstig ist es, dass es sich bei der Dentalmasse um einen licht- und/oder wärmehärtbaren Kunststoff handelt, **dadurch gekennzeichnet, dass** die Dentalmasse insbesondere zur Herstellung von Prothesen, insbesondere Zahnprothesen eingesetzt ist.

Erfindungsgemäß besonders günstig ist es, dass mehrere Schlitze im Entlüftungskanal in Strömungsrichtung hintereinander angeordnet sind, die insbesondere durch einen im Querschnitt sägezahnförmigen Verlauf der den Entlüftungskanal begrenzenden Seitenwand der Ausbringdüse oder der Kartusche ausgebildet sind.

Erfindungsgemäß besonders günstig ist es, dass die Kartusche im Bereich ihrer Auslassöffnung und/oder der Verjüngung kreissymmetrisch ausgebildet ist, und dass der Entlüftungskanal zwischen der Auslassöffnung und/oder der Verjüngung und der Ausbringdüse ausgebildet und in diese eingearbeitet ist.

Erfindungsgemäß besonders günstig ist es, dass der Entlüftungskanal umlaufend insbesondere im Übergangsbereich zwischen der Verjüngung und der Ausbringdüse ausgebildet ist und eine Sperre für die Dentalmasse bildet.

Erfindungsgemäß besonders günstig ist es, dass die Ausbringdüse in der Betriebsstellung der Ausbringvorrichtung oberhalb, insbesondere schräg oberhalb der Kartusche, angebracht ist.

Erfindungsgemäß besonders günstig die Verwendung der Ausbringvorrichtung in einem Injektionsgerät mit einem Rahmen, das eine mit dem Kolben der Ausbringvorrichtung zusammenwirkende Auspressvorrichtung aufweist.

Weitere Einzelheiten, Vorteile und Merkmale ergeben sich aus der nachfolgenden Beschreibung mehrerer Ausführungsbeispiele der Erfindung anhand der Zeichnungen.

Es zeigen:
- Fig. 1: eine schematische Seitenansicht einer erfindungsgemäßen Ausbringvorrichtung in einer ersten Ausführungsform;
- Fig. 2: ein Detail unter vergrößerter Darstellung zu Fig. 1;
- Fig. 3: eine weitere Ausführungsform einer erfindungsgemäßen Ausbringvorrichtung in teilweise schematischer Darstellung;
- Fig. 4: eine weitere Darstellung eines Details einer erfindungsgemäßen Ausbringvorrichtung in einer weiteren Ausführungsform; und
- Fig. 5: eine weitere Detaildarstellung einer weiterer nicht beanspruchten Ausführungsform einer Ausbringvorrichtung.

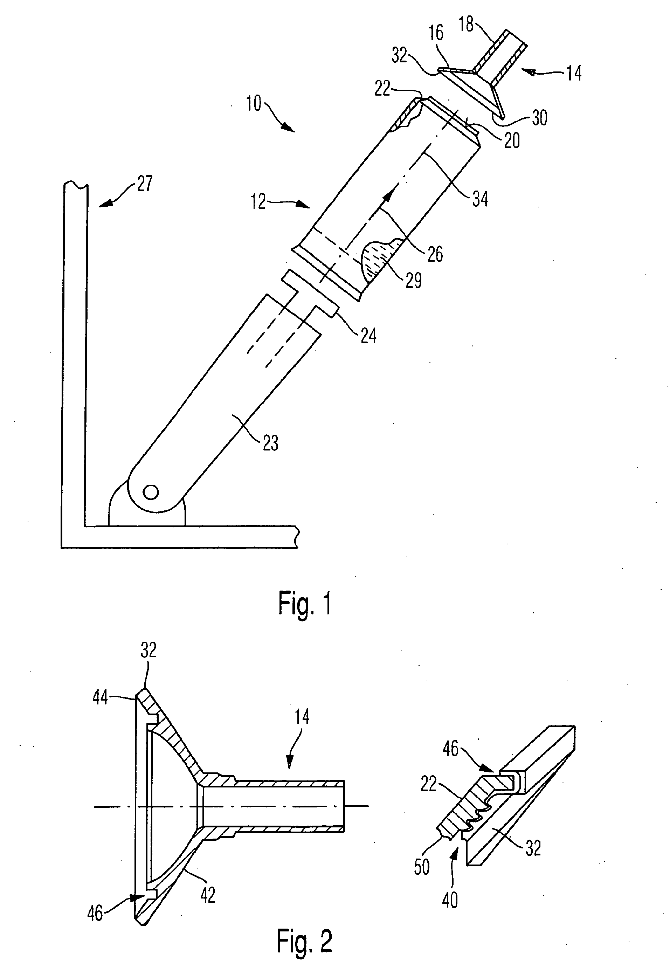

Die in Fig. 1 dargestellte Ausbringvorrichtung 10 weist eine Kartusche 12 und eine Ausbringdüse 14 auf. Die Ausbringdüse 14 ist in beliebiger geeigneter Weise kraft- oder formschlüssig mit der Kartusche 12 verbunden. Bevorzugt erfolgt dies über einen Rastwulst, der umlaufend ausgebildet ist, und der bei Kraftanwendung zum Aufschieben oder Aufdrücken der Ausbringdüse 14 einfedert, so dass die formschlüssige Verbindung realisierbar ist, oder über einen Gewindeeingriff oder eine geeignete andere Verbindung, beispielsweise mittels eines Bajonett-Verschlusses oder Ähnlichem.

Die Ausbringdüse 14 weist hierzu einen im Wesentlichen kegelstumpfförmigen Anschlussbereich 16 und eine Auslasstülle 18 auf, die einstückig miteinander ausgebildet sind.

Die Kartusche 12 weist an ihrer Auslassöffnung 20 eine leicht konische Ausgestaltung auf. Dort ist insofern ein Konusrand 22 im Umfangsbereich der Auslassöffnung 20 ausgebildet, der mit dem Anschlussbereich 16 zusammenpasst.

Wie aus den weiteren Figuren im Einzelnen ersichtlich ist, ist der Konusrand 22 für den Anschluss an das Anschlussbereich 16 geeignet ausgebildet, so dass sich eine sichere Verbindung realisieren lässt, die zudem auch druckfest ist.

Ferner ist der Anschlussbereich 16 der Ausbringdüse so ausgebildet, dass er den Konusrand 22 überlappt und abdeckt, wobei die Abdeckung bevorzugt bis zum Außenrand der Kartusche 12 reicht und die Kartusche 12 bei aufgesetzter Ausbringdüse 14 sicher handhabbar ist, ohne dass die Ausbringdüse 14 sich versehentlich löst.

Erfindungsgemäß ist es besonders günstig, wenn die Betriebsstellung der Ausbringvorrichtung, und zwar bevorzugt sowohl beim Befüllen als auch beim Ausbringen, so gewählt ist, dass die Auslassöffnung 20 oberhalb der Kartusche 12 im Übrigen zu liegen kommt. Damit liegt eine aufrechte oder im Wesentlichen aufrechte Position der Kartusche 12 vor.

Für das Ausbringen ist ein Stempel 24 vorgesehen, der am der Auslassöffnung gegenüberliegenden Ende in die Kartusche 12 eingeführt wird. Dieser Stempel 24 ist für das Befüllen noch nicht eingesetzt. Wie aus Fig. 1 schematisch ersichtlich ist, wird die Kartusche 12 entlang des Pfeils 26, also von unten nach schräg oben befüllt. Die eintretende Masse, die durchaus auch Lufteinschlüsse aufweisen kann, wird bis zur Auslassöffnung 20 eingefüllt. Etwa mitgenommene Lufteinflüsse sammeln sich dann an der höchsten Stelle der Kartusche 12 in der Position gemäß Fig. 1, also am Konusrand 22, vorausgesetzt, die Viskosität der eingefüllten dentalen Masse ist ausreichend niedrig, wie es erfindungsgemäß vorgesehen ist.

Unterhalb des Konusrands 22 oder an diesem sammeln sich typischerweise insofern mehrere Luftbläschen oder eine Luftblase, denn dieser stellt den höchsten Punkt der Kartusche 12 dar, wobei typischerweise bei einer frisch gefüllten Kartusche 12, die dann gleich mit der entsprechenden Ausbringdüse 14 versehen ist, erst im Laufe der Zeit die gesamte Luft sich dort ansammelt.

Erfindungsgemäß ist es günstig, wenn die Kartusche 12 in aufrechter oder schräg aufrechter Stellung gemäß Fig. 1 aufbewahrt und auch eingesetzt wird, aber insbesondere, dass ein Entlüftungskanal 40 zwischen der Ausbringdüse 14 und der Kartusche 12 ausgebildet ist. Hierzu ist eine Auspressvorrichtung 23 vorgesehen, die einen Stempel 24 aufweist, der in die Kartusche 12 einführbar ist. Die Auspressvorrichtung 23 ist an einem Rahmen 27 eines Injektionsgeräts abgestützt. Im Betrieb dichtet der Stempel 24 gegen die Innenwand der Kartusche 12 ab, so dass er in der Lage ist, die dort aufgenommene Dentalmasse 29 vollständig aus der Kartusche 12 herauszudrücken, und zwar durch die Auslassöffnung 20 hindurch.

Nachdem die Ausbringdüse 14 mit ihrem Befestigungsflansch 30 in die Kartusche 12 an der Auslassöffnung 20 hineinragt, ist es bevorzugt, mindestens an einer Stelle des Umfangs oder ggf. über den gesamten Umfang verteilt, den Durchmesser der Kartusche 12 dort so groß zu wählen, dass ein Entlüftungskanal 40 entsteht. Die so abgeleitete Luft vermag dann in dem schrägen Spalt zwischen dem Abdeckkragen 32 der Ausbringdüse 14 und der Außenseite des Konusrands 22 zu entweichen.

Es versteht sich, dass der Abdeckkragen 32 in seiner Ausgestaltung in weiten Bereichen an die Erfordernisse und insbesondere auch an die genaue Ausgestaltung er Auslassöffnung 20 angepasst werden kann. Insbesondere ist es auch möglich, den Abdeckkragen 32 noch weiter nach unten zu ziehen, so dass er mindestens teilweise parallel zur Achse 34 der Kartusche 12 verläuft.

In modifizierter Ausgestaltung ist es vorgesehen, anstelle der Schrägfläche, also des Konusrands 22 der Kartusche 12, eine nahezu vollständig zylindrische Form zu geben. Bei dieser Lösung ist dann ein Gewinde, ein Bajonett-Verschluss oder eine sonstige formschlüssige Verbindung zwischen der Ausbringdüse 14 und der Kartusche 12 nahe des Außenumfangs der Kartusche 12 vorgesehen, und im Extremfall kann der Entlüftungskanal 40, der aus der rechten Darstellung in Fig. 2 am besten ersichtlich ist, auch durch einen einfachen Schlitz gebildet sein.

Es versteht sich auch, dass die Ausgestaltung der Ausbringdüse - ob mit oder ohne Tülle oder beispielsweise mit Schlauchanschluss in weiten Bereichen an die Erfordernisse anpassbar ist. Wesentlich ist jedenfalls, dass die etwaige im Bereich der höchsten Stelle der Kartusche 12 angesammelte Luft vollständig über den Entlüftungskanal 40 entfernbar ist und nicht in die Ausbringdüse 14 gelangen kann.

Aus Fig. 2 ist ersichtlich, in welcher Weise die Ausbringdüse 14 und der Entlüftungskanal 40 ausgebildet sein können.

Wie aus Fig. 2 ersichtlich ist, weist die Auslasstülle 18 den Befestigungsflansch 30, der sich teilweise in die Kartusche 12 hinein erstreckt, und den Abdeckkragen 32 auf. Der Abdeckkragen 32 erstreckt sich in der Verlängerung des Konuskörpers 42 der Ausbringdüse 14 im im Wesentlichen gleichen Schrägstellungswinkel wie der Konusrand 22 der Kartusche 12. Der Befestigungsflansch 20 ist an seinem Außenrand 44 mit formschlüssigen Elementen, beispielsweise einem Gewinde, versehen, das für den Eingriff mit einem entsprechenden Formschlusselement an der Öffnung der Auslassöffnung 20 der Kartusche 12 bestimmt ist. Zur Ausbildung dieses Außenrands 44, der sich im Wesentlichen parallel zur Achse 34 erstreckt, weist der Konuskörper 42 eine Nut 46 auf, die umlaufend ausgebildet ist, und durch die hindurch sich der Entlüftungskanal 40 erstreckt, wie es aus Fig. 2 im rechten Bereich ersichtlich ist.

Aus Fig. 2 im rechten Bereich ist auch ersichtlich, dass der Entlüftungskanal 40 nicht gerade verläuft, sondern im Bereich der Nut 46 zweimal um je 90° abgebogen ist. Im weiteren Verlauf des Entlüftungskanals 40, zwischen dem Konusrand 22 und dem Abdeckkragen 32, ist eine Art Sägezahnprofil 50 vorgesehen, das im Beispielsfall an dem Abdeckkragen 32 innen vorgesehen ist.

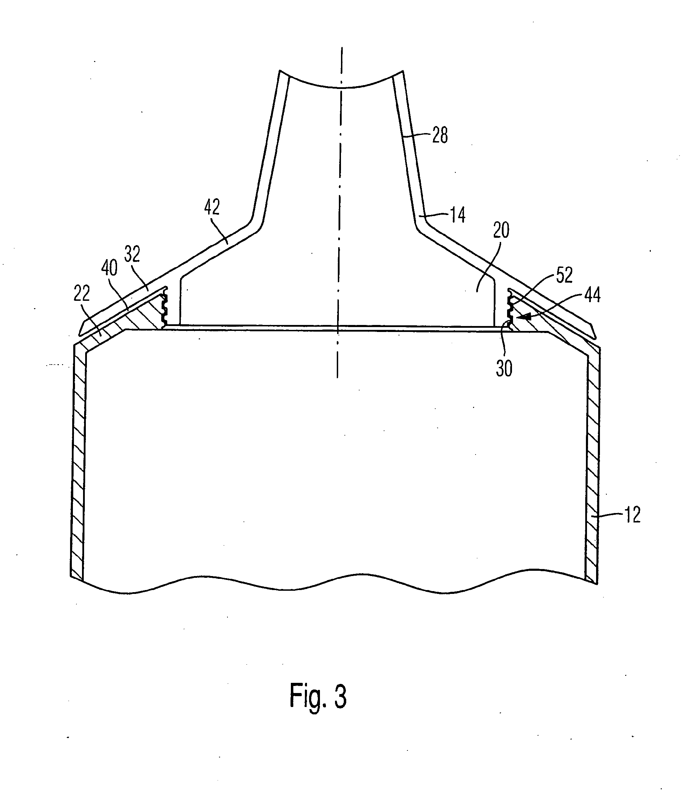

Aus Fig. 3 ist ersichtlich, in welcher Weise der Entlüftungskanal 40 sich im Übergangsbereich zwischen der Kartusche 12 und der Ausbringdüse 14 erstrecken kann. Dort ist ein Gewinde 52 durch den Eingriff zwischen einem nicht im Einzelnen dargestellten Innengewinde der Auslassöffnung 20 und einem Außengewinde an dem Außenrand 44 des Befestigungsflansches 30 vorgesehen. Dieses Gewinde ist so ausgebildet, dass bewusst mindestens teilweise Spiel gelassen wird oder sich der Entlüftungskanal 40 durch das Gewinde hindurch erstreckt. Dies kann durch Unterbrechungen des Gewindegangs, unterschiedliche Stärken und abwechselnde Durchbrechungen oder aber beispielsweise auch durch eine Welligkeit eines der Gewindegänge realisiert sein, um die Durchlässigkeit für Luft zu verbessern, obwohl die Führung der Gewinde aneinander nicht verschlechtert ist.

Wie aus Fig. 3 ersichtlich ist, ist der Entlüftungskanal 40 umlaufend ausgebildet. Es versteht sich, dass anstelle dessen auch ein einseitig vorgesehener Entlüftungskanal 40 realisierbar ist, beispielsweise, wenn die Position der Kartusche 12 in einer Ausbringvorrichtung fixiert ist, also eindeutig feststeht, welche Stelle im Betrieb den höchsten Punkt der Kartusche 12 bildet.

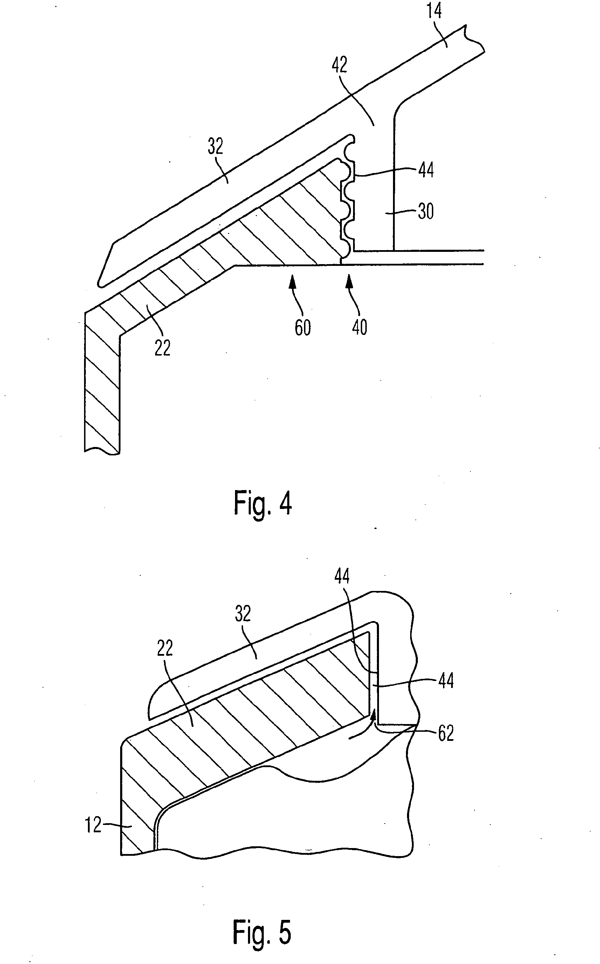

Aus Fig. 4 ist in vergrößerter Darstellung ersichtlich, in welcher Weise Luft durch den Entlüftungskanal 40 austreten kann, wobei wie auch in den weiteren Figuren gleiche oder entsprechende Teile mit gleichen Bezugszeichen versehen sind.

Fig. 5 zeigt eine demgegenüber weiter modifizierte Ausführungsform einer Kartusche 12, die innen frei von geraden Flächen entsprechend der Fläche 60 in Fig. 4 ist. Diese Lösung ist beispielsweise bei aufrechter Stellung der Kartusche 12 gut geeignet, da dann der höchste Punkt der Kartusche 12 am Einlassschlitz 62 des Entlüftungskanals 40 ausgebildet ist.

Hier bei dieser Ausführungsform ist der Entlüftungskanal 40 gerade und hindernisfrei mit lediglich einer Umlenkung ausgebildet, wobei es sich versteht, dass die Form des Entlüftungskanals40 in weiten Bereichen an die Erfordernisse anpassbar ist.

## Patentansprüche

1. Ausbringvorrichtung für Dentalmassen, mit einer Kartusche(12), die einen Kolben aufweist und für die Aufnahme der Dentalmasse bestimmt ist, sowie mit einer Ausbringdüse (14), die eine Auslassöffnung der Kartusche (12) abdeckt und insbesondere formschlüssig mit der Kartusche (12) verbunden ist, wobei die Ausbringdüse (14) und/oder die Kartusche (12) oder deren Übergangsbereich wenigstens einen Entlüftungskanal (40) aufweisen, der sich von dem Innenraum der Kartusche (12) nach außen erstreckt und dessen lichte Weite oder dessen Durchmesser den Austritt von Dentalmasse sperrt, **dadurch gekennzeichnet, dass** der Entlüftungskanal (40) eine Mehrzahl von Sperrstufen aufweist.

2. Ausbringvorrichtung nach Anspruch 1, **dadurch gekennzeichnet, dass** die Kartusche (12) im Umfangsbereich ihrer Auslassöffnung (20) insbesondere kegelstumpfförmig verjüngt ausgebildet ist und dass ein Anschlussbereich der Ausbringdüse (14) eine entsprechende Gegenkontur aufweist und insbesondere die Verjüngung von dem Anschlussbereich der Ausbringdüse (14) mindestens teilweise abgedeckt ist.

3. Ausbringvorrichtung nach einem der vorhergehenden Ansprüche, **dadurch gekennzeichnet, dass** der Entlüftungskanals (40) sich an einer Dichtung zwischen der Ausbringdüse (14) und der Kartusche (12), insbesondere zwischen Enden der Dichtung, erstreckt, die sich wenigstens teilweise entlang einem Umfangsbereich der Auslassöffnung (20) erstreckt.

4. Ausbringvorrichtung nach einem der vorhergehenden Ansprüche, **dadurch gekennzeichnet, dass** wenigstens ein Teil des Entlüftungskanals (40) bei der Dichtung mindestens eine Umlenkung aufweist und diesen verlängert, wobei der Entlüftungskanal (40) insbesondere in Form eines Labyrinths ausgebildet ist.

5. Ausbringvorrichtung nach einem der vorhergehenden Ansprüche, **dadurch gekennzeichnet, dass** sich am Einlass des Entlüftungskanals (40) Dentalmasse ansammelt und den Entlüftungskanal (40) abdichtet.

6. Ausbringvorrichtung nach einem der vorhergehenden Ansprüche, **dadurch gekennzeichnet, dass** der Entlüftungskanal (40) mindestens einen Schlitz oder schmalen Spalt aufweist, dessen Höhe so gering ist, dass er von der Dentalmasse bei Betätigung des Kolbens nicht durchdringbar ist.

7. Ausbringvorrichtung nach einem der vorhergehenden Ansprüche, **dadurch gekennzeichnet, dass** der Spalt kleiner als 1 mm, insbesondere kleiner als 0,5 mm ist, und dass insbesondere in dem Entlüftungskanal (40) ein luftdurchlässiger Filter angeordnet ist.

8. Ausbringvorrichtung nach einem der vorhergehenden Ansprüche, **dadurch gekennzeichnet, dass** es sich bei der Dentalmasse um einen licht- und/oder wärmehärtbaren Kunststoff handelt, und dass die Dentalmasse insbesondere zur Herstellung von Prothesen, insbesondere Zahnprothesen, eigesetzt ist.

9. Ausbringvorrichtung nach einem der vorhergehenden Ansprüche, **dadurch gekennzeichnet, dass** mehrere, insbesondere elastische Lippen im Entlüftungskanal (40) in Strömungsrichtung hintereinander angeordnet sind.

10. Ausbringvorrichtung nach einem der vorhergehenden Ansprüche, **dadurch gekennzeichnet, dass** die Kartusche (12) im Bereich ihrer Auslassöffnung (20) und/oder der Verjüngung kreissymmetrisch ausgebildet ist.

11. Ausbringvorrichtung nach einem der vorhergehenden Ansprüche, **dadurch gekennzeichnet, dass** der Entlüftungskanal (40) umlaufend insbesondere im Übergangsbereich zwischen der Verjüngung und der Ausbringdüse (14) ausgebildet ist und eine Sperre für die Dentalmasse bildet.

12. Verwendung der Ausbringvorrichtung gemäß den Ansprüchen 1 bis 11 in einem Injektionsgerät, das eine mit dem Kolben der Ausbringvorrichtung zusammenwirkenden Auspressvorrichtung (23) aufweist.

## Claims

1. Application device for dental materials comprising a cartridge (12) having a piston and being adapted to receive the dental material, said application device further comprising an application nozzle (14) that covers an outlet port of the cartridge (12) and that is in particular positively connected with the cartridge (12), wherein the application nozzle (14) and/or the cartridge (12) or the transition region thereof at least comprise one vent duct (40) that extends outwardly from the interior of the cartridge (12) and whose inner width or diameter blocks the discharge of dental material, **characterized in that** the vent duct (40) comprises a plurality of blocking levels.

2. Application device as claimed in claim 1, **characterized in that** the cartridge (12) in the perimeter region of its outlet port (20) in particular has the shape of a tapered truncated cone and **in that** a connecting region of the application nozzle (14) comprises a corresponding counter contour and **in that** in particular the taper of the connecting region of the application nozzle (14) is at least partially covered.

3. Application device as claimed in one of the preceding claims, **characterized in that** the vent duct (40) extends along a seal between the application nozzle (14) and the cartridge (12), in particular between ends of the seal, said seal at least partially extending along a perimeter region of the outlet port (20).

4. Application device as claimed in one of the preceding claims, **characterized in that** at least part of the vent duct (40) comprises at least one deflection at the seal, thus elongating the vent duct, said vent duct (40) in particular having the shape of a labyrinth.

5. Application device as claimed in one of the preceding claims, **characterized in that** dental material accumulates at the inlet of the vent duct (40) and seals the vent duct (40).

6. Application device as claimed in one of the preceding claims, **characterized in that** the vent duct (40) comprises at least a slot or narrow gap whose height is dimensioned so small that upon actuation of the piston dental material cannot penetrate or get through.

7. Application device as claimed in one of the preceding claims, **characterized in that** the gap is smaller than 1 mm, in particular smaller than 0.5 mm, and **in that** in the vent duct (40) in particular a filter that is permeable to air is arranged.

8. Application device as claimed in one of the preceding claims, **characterized in that** the dental material is a plastic material that can be cured by light and/or heat, and **in that** the dental material is in particular used for the production of implants, in particular dentures.

9. Application device as claimed in one of the preceding claims, **characterized in that** several, in particular elastic lips are arranged one after another in the direction of flow within the vent duct (40).

10. Application device as claimed in one of the preceding claims, **characterized in that** the cartridge (12) has a circle-symmetric shape in the region of its outlet port (20) and/ or the taper.

11. Application device as claimed in one of the preceding claims, **characterized in that** the vent duct (40) is arranged along the entire periphery, in particular in the transition region between the taper and the application nozzle (14) and forms a barrier for the dental material.

12. Use of the application device as claimed in the claims 1 to 11 in an injection apparatus that comprises an extrusion device (23) acting together with the piston of the application device.

## Revendications

1. Dispositif de distribution pour des masses dentaires, avec une cartouche (12) qui présente un piston et est destinée au logement de la masse dentaire, ainsi qu'avec une buse de distribution (14) qui recouvre une ouverture de sortie de la cartouche (12) et est reliée en particulier par complémentarité de formes à la cartouche (12), la buse de distribution (14) et/ou la cartouche (12) ou sa zone de transition présentant un canal de ventilation (40) qui s'étend vers l'extérieur depuis l'espace intérieur de la cartouche (12) et dont le diamètre intérieur ou son diamètre bloque la sortie de la masse dentaire, **caractérisé en ce que** le canal de ventilation (40) présente une pluralité de gradins de blocage.

2. Dispositif de distribution selon la revendication 1, **caractérisé en ce que** la cartouche (12) est réalisée rétrécie en particulier en forme de cône tronqué dans la zone périphérique de son ouverture de sortie (20) et **en ce qu'**une zone de raccordement de la buse de distribution (14) présente un contour antagoniste correspondant et en particulier le rétrécissement est recouvert au moins en partie par la zone de raccordement de la buse de distribution (14).

3. Dispositif de distribution selon l'une quelconque des revendications précédentes, **caractérisé en ce que** le canal de ventilation (40) s'étend sur une garniture entre la buse de distribution (14) et la cartouche (12), en particulier entre des extrémités de la garniture qui s'étend au moins en partie le long d'une zone périphérique de l'ouverture de sortie (20).

4. Dispositif de distribution selon l'une quelconque des revendications précédentes, **caractérisé en ce qu'**au moins une partie du canal de ventilation (40) présente près de la garniture au moins une déviation et la prolonge, le canal de ventilation (40) étant réalisé en particulier sous la forme d'un labyrinthe.

5. Dispositif de distribution selon l'une quelconque des revendications précédentes, **caractérisé en ce que** la masse dentaire s'accumule sur l'entrée du canal de ventilation (40) et le rend étanche.

6. Dispositif de distribution selon l'une quelconque des revendications précédentes, **caractérisé en ce que** le canal de ventilation (40) présente au moins une entaille ou fente étroite, dont la hauteur est si faible qu'elle ne peut être traversée par la masse dentaire lors de l'actionnement du piston.

7. Dispositif de distribution selon l'une quelconque des revendications précédentes, **caractérisé en ce que** la fente est inférieure à 1 mm, en particulier inférieure à 0,5 mm et **en ce qu'**en particulier un filtre perméable à l'air est disposé dans le canal de ventilation (40).

8. Dispositif de distribution selon l'une quelconque des revendications précédentes, **caractérisé en ce qu'**il s'agit pour la masse dentaire d'un plastique durcissable à la lumière et/ou à la chaleur, et **en ce que** la masse dentaire est utilisée en particulier pour fabriquer des prothèses, en particulier des prothèses dentaires.

9. Dispositif de distribution selon l'une quelconque des revendications précédentes, **caractérisé en ce que** plusieurs lèvres, en particulier élastiques, sont disposées dans le canal de ventilation (40) les unes derrière les autres dans le sens de passage.

10. Dispositif de distribution selon l'une quelconque des revendications précédentes, **caractérisé en ce que** la cartouche (12) est réalisée de manière circulaire et symétrique dans la zone de son ouverture de sortie (20) et/ou du rétrécissement.

11. Dispositif de distribution selon l'une quelconque des revendications précédentes, **caractérisé en ce que** le canal de ventilation (40) est réalisé de manière périphérique, en particulier dans la zone de transition entre le rétrécissement et la buse de distribution (14) et forme une barrière pour la masse dentaire.

12. Utilisation du dispositif de distribution selon les revendications 1 à 11 dans un appareil d'injection qui présente un dispositif de pressage (23) coagissant avec le piston du dispositif de distribution.
